Europäisches Patentamt

(19) European Patent Office

Office européen des brevets

(11) Publication number: **0 160 706**
**B1**

(12) **EUROPEAN PATENT SPECIFICATION**

(45) Date of publication of patent specification: **01.02.89**

(21) Application number: **84904159.5**

(22) Date of filing: **07.11.84**

(86) International application number:
**PCT/JP84/00532**

(87) International publication number:
**WO 85/02312 23.05.85 Gazette 85/12**

(51) Int. Cl.⁴: **H 04 N 7/01,** H 04 N 5/44

(54) **TELEVISION RECEIVER.**

(30) Priority: **07.11.83 JP 208740/83**

(43) Date of publication of application:
**13.11.85 Bulletin 85/46**

(45) Publication of the grant of the patent:
**01.02.89 Bulletin 89/05**

(84) Designated Contracting States:
**DE FR GB NL**

(56) References cited:
**GB-A-2 090 504**
**GB-A-2 092 858**
**JP-A-58 094 278**

(73) Proprietor: **SONY CORPORATION**
**7-35 Kitashinagawa 6-Chome Shinagawa-ku**
**Tokyo 141 (JP)**

(72) Inventor: **OKADA, Takashi Sony Corporation**
**7-35, Kitashinagawa 6-chome**
**Shinagawa-ku Tokyo 141 (JP)**
Inventor: **IKEDA, Yasunari Sony Corporation**
**7-35, Kitashinagawa 6-chome**
**Shinagawa-ku Tokyo 141 (JP)**

(74) Representative: **Thomas, Christopher Hugo
et al**
**D Young & Co 10 Staple Inn**
**London WC1V 7RD (GB)**

## Description

This invention relates to a television receiver.

In existing television systems, so-called interlaced scanning is used in which one frame is transmitted as two interlaced fields. This is intended to increase the number of scanning lines as much as possible in a limited frequency band without flicker being perceived by a viewer.

However, in the CCIR system mainly employed in European countries, the field frequency is 50 Hz, and flicker cannot be completely removed, becoming particularly conspicuous at high brightness.

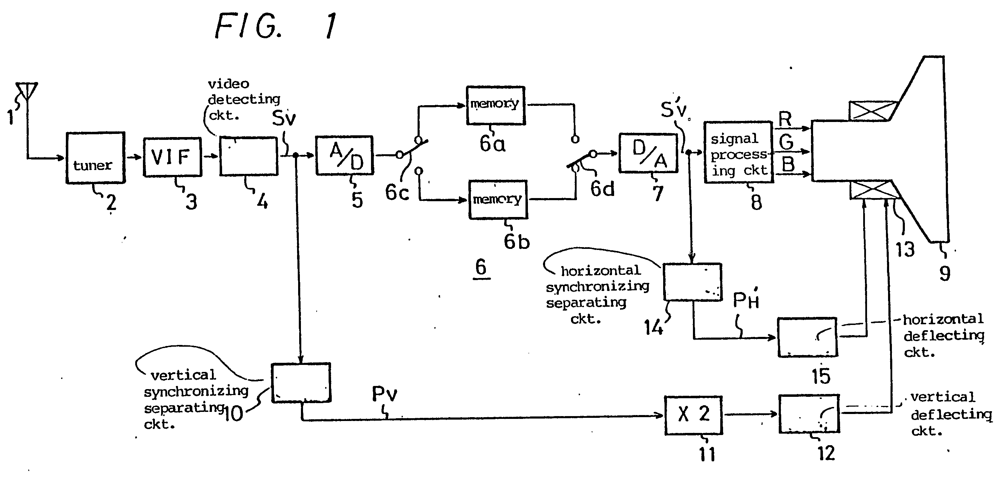

UK patent specification GB—A—2 092 858 produces a television receiver in which a picture is displayed at twice the normal field frequency. Figure 1 shows an example thereof. The receiver comprises an antenna 1, a tuner 2, a video intermediate frequency amplifier 3, and a video detecting circuit 4, which produces an interlaced video signal Sv of 625 lines/50 fields andd 2:1. The video signal Sv is converted to a digital signal by an A/D converter 5 and fed to a converting circuit 6 to be converted to a video signal with twice the normal field frequency.

The converting circuit 6 is formed of field memories 6a and 6b (random access memories (RAMs) having a storage capacity of the picture elements of one field period (1V)), and switching circuits 6c and 6d. The switching circuit 6c is changed in position to the sides of the memories 6a and 6b at every field period IV, while the switching circuit 6d is changed in position reversely. The memory selected by the switching circuit 6c is supplied with a write clock pulse having a timing corresponding to the above-described picture elements, while the memory selected by the switching circuit 6d is supplied with a read clock pulse with a frequency twice that of the write clock pulse.

One field of the video signal Sv converted to the digital signal is supplied through the switching circuit 6c to the memories 6a and 6b at every field period IV, in which it is written. The field of video signal written in the memories 6b and 6a during a field period IV just before the above-mentioned field period, is read out therefrom twice consecutively with a cycle V/2. This video signal Sv' with twice the normal field frequency is derived through the switching circuit 6d.

The video signal Sv' is converted to an analogue signal by a D/A converter 7 and fed to a signal processing circuit 8 which produces red, green and blue primary colour signals R, G and B which are supplied to an image receiving tube 9.

The video signal Sv from the video detecting circuit 4 is supplied to a vertical synchronizing separating circuit 10. A vertical synchronizing signal Pv derived from the separating circuit 10 is multiplied by a frequency multiplier 11 to form a signal of twice the ordinary frequency, which is supplied through a vertical deflecting circuit 12 to a deflecting coil 13.

The video signal Sv' derived from the D/A converter 7 is supplied to a horizontal synchronizing separating circuit 14. A horizontal synchronizing signal $P_H'$ (of twice the normal frequency) derived from the separating circuit 14 is supplied through a horizontal deflecting circuit 15 to the deflecting coil 13.

As a result, a colour picture with a field frequency twice the normal field frequency is displayed on the picture receiving tube 9. Accordingly, in the CCIR system, the field frequency becomes 100 Hz and the viewer sees no flicker.

In the case of the example shown in Figure 1, however, the horizontal synchronization of the video signal Sv' derived from the converting circuit 6 is disturbed cyclically, to that distortion occurs in the upper portion of the picture screen.

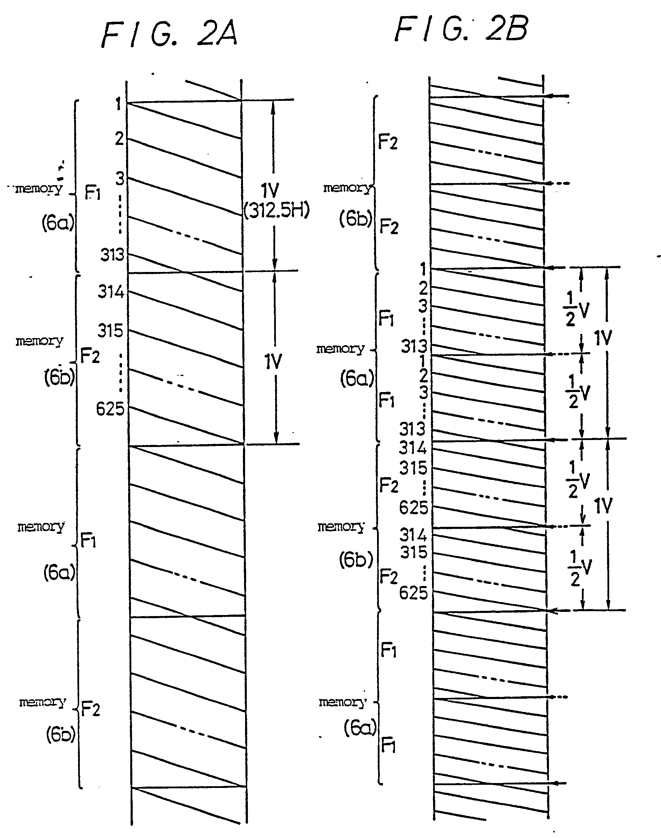

That is, the write-in state of the video signal Sv derived from the video detecting circuit 4 in the memories 6a and 6b is expressed as shown in Figure 2A, in which F1 and F2 designate first and second fields, respectively. The video signal Sv' from the converting circuit 6 is expressed as shown in Figure 2B in which arrows represent the positions of the vertical synchronizing signals. As will be clear from Figure 2B, in the video signal Sv', the phase of the horizontal synchronization is displaced by 180° every two fields, or every 1/50 second (shown by broken line arrows), whereby the synchronization on the upper portion of the picture screen is disturbed, resulting in distortion.

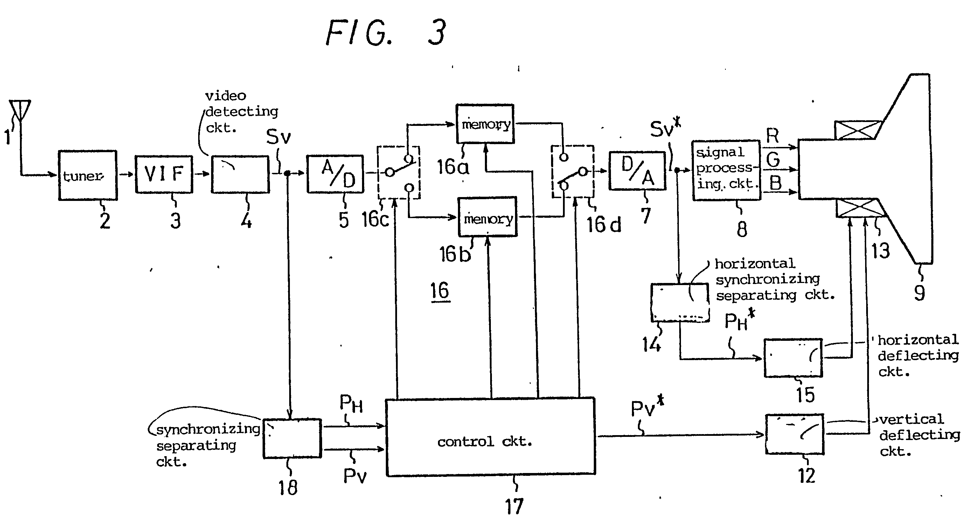

Therefore, we have proposed a television receiver which is free of such distortion and Figure 3 shows an example thereof. In Figure 3, like parts corresponding to those of Figure 1 are marked with the same references.

The video signal Sv derived from the video detecting circuit 4 is converted to a digital signal by the A/D converter 5, and fed to a converting circuit 16 so as to be converted to a video signal of twice the normal field frequency.

The converting circuit 16 is formed of field memories (RAMs) 16a and 16b having the storage capacities of picure elements of 313 horizontal periods (313H) and 312 horizontal periods (312H), and switching circuits 16c and 16d. The switching circuit 16 is changed in position alternately to the side of the memory 16a during each period of 313H and to the side of the memory 16b during each period of 312H, while the switching circuit 16d is changed in position in the reverse manner. These change-overs are controlled by a control circuit 17 which is supplied with horizontal and vertical synchronizing signals $P_H$ and $P_V$ which are separated from the video signal Sv by a synchronizing separating circuit 18.

The memory selected by the switching circuit 16c is supplied with write clock pulse having the timing corresponding to the above picture elements, while the memory selected by the switching circuit 16d is supplied with a read clock pulse with a frequency twice the frequency of the write clock pulse.

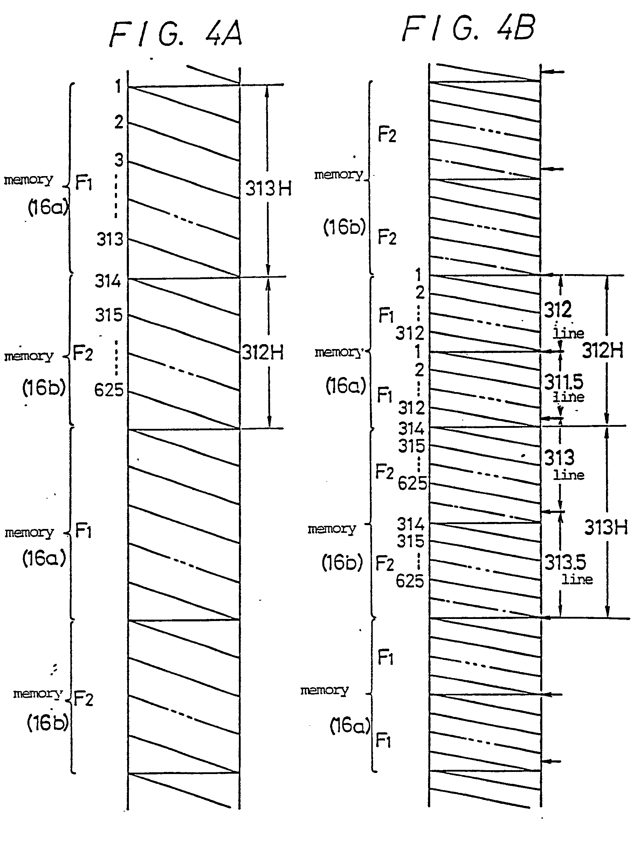

The video signal Sv converted to the digital signal by the A/D converter 5 is supplied through the switching circuit 16c to the memories 16a and 16b in which it is alternately written during each period of 313H and 312H. Figure 4A shows the write-in state of the memories 16a and 16b, in which references F1 and F2 represent the first and second fields, respectively. During the periods of 313H and 312H in which the video signal is being written in one of the memories 16a and 16b, the video signal written in the other of the memories 16b and 16a during the periods just before the above 312H and 313H are read out therefrom twice consecutively. This signal is derived from the switching circhit 16d as a video signal Sv* of twice normal field frequency. Figure 4B shows the video signal Sv* which is derived through the switching circuit 16d, in which the field portions corresponding to those of Figure 4A are marked with the same references. Due to the difference between the write time and the read time, one more or one less line per field is produced in the video signal Sv*.

In Figure 4B, at the portions of, for example, the F1 and F1 fields (the portions read out from the memory 16a), 313 lines are not read out because of a time relation. Moreover, at, for example, the F2 and F2 field portions (the portions read out from the memory 16b), one line of video signal is lost and, during that period, the reading operation is lost (shown by one-dot chain lines). The extra and lost lines occur in the vertical blanking period so that, in practice, this does not disturb the television picture.

The writing in and reading out from the memorised 16a and 16b are controlled by the control circuit 17.

The video signal Sv* derived from the switching circuit 16d is converted to the analogue signal by the D/A converter 7 and then fed to the signal processing circuit 8. Then, the red, green and blue primary colour signals R, G and B are produced from the signal processing circuit 8 and fed to the picture receiving tube 9.

The control circuit 17 produces a vertical synchronizing signal Pv* at the timing shown by arrows in Figure 4B. More particularly, the vertical synchronizing signal Pv* is produced at the beginning of the first F1 field, 312 lines after the preceding line, namely, at the beginning of the second F1 field, at the timing 311.5 lines after the preceding line, at the timing 313 lines after the preceding line, and at the timing 313.5 lines after the preceding line, or the beginning of the first F1 field. The synchronizing signal Pv* is supplied through the vertical deflecting circuit 12 to the deflecting coil 13 for vertical deflecting scanning. When the synchronizing signal Pv* is produced at the above-mentioned timing, in the same F1 field and F2 field, the scanning lines are formed at the same positions and the scanning lines respectively formed at the F1 field and F2 field are displaced by 1/2 scanning line spacing. In other words, the interlaced relation of the video signal Sv is kept as it is.

The video signal Sv* from the D/A converter 7 is supplied to the horizontal synchronizing separating circuit 14. A horizontal synchronizing signal $P_H$* (of twice the normal frequency) derived from the separating circuit 14 is supplied through the horizontal deflecting circuit 15 to the deflecting coil 13 for horizontal deflection scanning.

Thus, the horizontal synchronization of the video signal Sv* becomes continuous as shown in Figure 4B, so that the synchronization is not disturbed by non-successive horizontal synchronization, unlike the example of Figure 1, so no picture distortion is produced.

However, in the example of Figure 3, since the generation timing of the vertical synchronizing signal Pv* is determined such that the scanning lines of the same F1 fields and F2 fields are formed at the same positions (see the arrows in Figure 4B), the vertical cycle is made very slightly different, and is not exactly 1/100 sec = 10m sec.

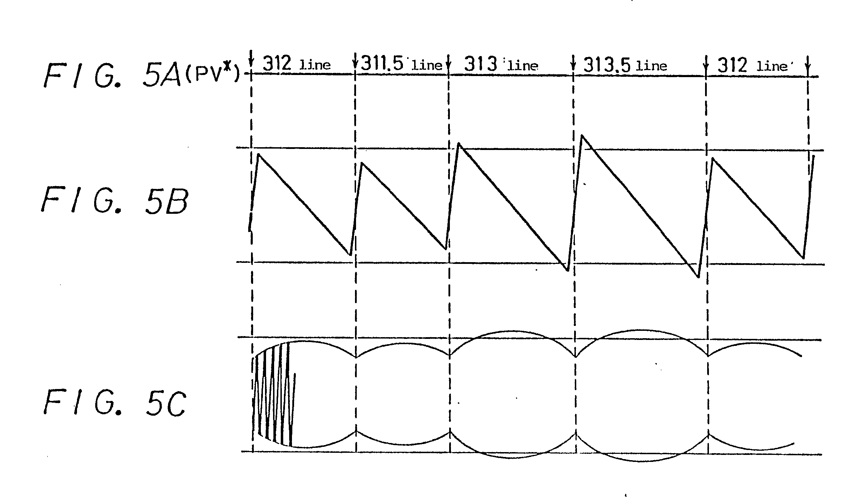

In the television receiver, in order to corrrect left and right pin-cushion distortion, a parabolic wave current with the vertical synchronizing frequency is superimposed on the horizontal deflection current. In this case, since the cycle of the vertical synchronizing signal Pv* is different (see Figure 5A) as mentioned above, the vertical deflection current also becomes correspondingly different (see Figure 5B). Moreover, the horizontal deflection current waveform is changed at every vertical cycle (see Figure 5C). As described above, since the horizontal deflection current waveform is different, a jitter appears at the right and left ends of the picture screen at a fundamental frequency of 25Hz (four field cycles of F1, F1, F2 and F2). This jitter becomes conspicuous if the deflection angle becomes larger.

To remove this jitter, correction of the horizontal deflection current waveform by the deflecting system has been considered. However, this correction is very difficult and requires a special deflection correcting circuit.

In this case, since the cycle of the vertical synchronizing signal Pv* becomes different (see Figure 5A), the vertical deflecting current also becomes different at every critical cycle (see Figure 5B) but this is not a serious problem.

According to the present invention there is provided a television receiver comprising:

scan converter means including field-memory means supplied with an input video signal of an interlaced television system, memory control means for supplying writing and reading signals to said field-memory means where the frequency of said reading signal is different from that of said writing signal, and an output terminal for deriving an output video signal; and

a video display means supplied with said output video signal; characterized by;

means provided in said memory control means for changing the frequency of said reading signal at a vertical rate such that vertical intervals of odd fields of said output video signal are made of substantially identical duration to vertical intervals of even fields of said output video signal.

The invention will now be described by way of example with reference to the accompanying drawings, throughout which like parts are referred to by like references, and in which:

Figures 1 and 3 are block diagrams of respective previously proposed television receivers;

Figures 2, 4 and 5 are diagrams for explaining the previously proposed receivers;

Figure 6 is a block diagram showing an embodiment of television receiver according to the present invention;

Figure 7 is a diagram showing a practical example of a PLL circuit;

Figure 8 is a block diagram showing another embodiment of televison receiver according to the present invention; and

Figure 9 is a diagram for the explanation thereof.

In the embodiment of Figure 3, the duration of the period of 312 lines (hereinafter referred to as A field) from the beginning of the first F1 field, the duration of the period of 311.5 lines (hereinafter referred to as B field) after the preceding period, the duration of the period of 313 lines (hereinafter referred to as C field) after the preceding period and the duration of the period of 313.5 lines (hereinafter referred to as D field) after the preceding period shown in Figure 4B or the respective vertical cycles become equal to 1/100 sec = 10 m sec.

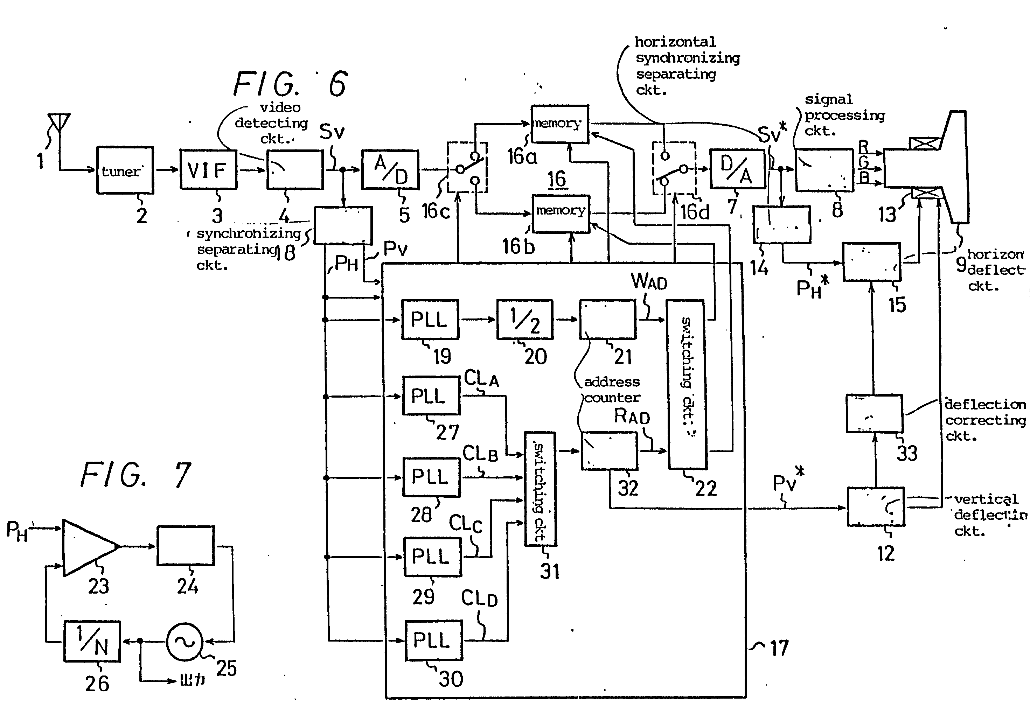

A PLL circuit 19 is supplied with the horizontal synchronizing signal $P_H$ from the synchronizing separating circuit 18 and produces at its output a signal of frequency, for example, 1250 $f_H$ ($f_H$ is the horizontal frequency). This signal is supplied through a frequency divider 20 having a frequency dividing ratio of two to a write address counter 21 as its write clock pulse. A write address $W_{AD}$ from the counter 21 is supplied through a switching circuit 22 to the memories 16a and 16b. The PLL circuit 19 is constructed as, for example, shown in Figure 7, comprising a phase comparator 23, a low-pass filter 24, a voltage-controlled type variable frequency oscillator 25 and a 1/N frequency divider 26, where N is 1250.

Figure 6 shows PLL circuits 27, 28, 29 and 30 which produce read clock pulses $CL_A$, $CL_B$, $CL_C$ and $CL_D$ of A, B, C and D fields, respectively. These PLL circuits 27 to 30 are supplied with the horizontal synchronizing signal $P_H$ from the synchronizing separating circuit 18.

In this embodiment, since the periods of the A to D fields are made equal to 10 m sec, if the frequencies of the clock pulses $CL_A$, $CL_B$, $CL_C$ and $CL_D$ produced from the PLL circuits 27, 28, 29 and 30 are respectively taken as $f_A$, $f_B$, $f_C$ and $f_D$, the following relation is established:

$$f_A : f_B : f_C : f_D$$

$$= \frac{312 \text{ lines}}{10 \text{ m sec}} : \frac{311.5 \text{ lines}}{10 \text{ m sec}} : \frac{313 \text{ lines}}{10 \text{ m sec}} : \frac{313.5 \text{ lines}}{10 \text{ m sec}}$$

$$= 624 : 623 : 626 : 627$$

Moreover, the frequency of each of these clock pulses $CL_A$ to $CL_D$ is selected to be substantially twice the frequency of the write clock pulse.

Accordingly, the frequencies $f_A$, $f_B$, $f_C$ and $f_D$ of the clock pulses $CL_A$, $CL_B$, $CL_C$ and $CL_D$ are selected to be 1248 $f_H$, 1246 $f_H$, 1252 $f_H$ and 1254 $f_H$, respectively. The PLL circuits 27, 28, 29 and 30 are constructed as, for example, shown in Figure 7, such that N is 1248, 1246, 1252 and 1254 respectively.

The clock pulses $CL_A$, $CL_B$, $CL_C$ and $CL_D$ from the PLL circuits 27, 28, 29 and 30 are respectively supplied to a switching circuit 31 which supplies the clock pulses $CL_A$, $CL_B$, $CL_C$ and $CL_D$ during the periods of the A, B, C and D fields. The clock pulse derived from the switching circuit 31 is supplied to a read address counter 32. A read address $R_{AD}$ from the counter 32 is supplied through the switching circuit 22 to the memories 16a and 16b. The memory 16a or 16b set in the write mode by the switching circuit 22 is supplied with the write address $W_{AD}$, while the memory 16a or 16b set in the read mode thereby is supplied with the read address $R_{AD}$.

A pin-cushion distortion correcting circuit 33 superimposes a parabolic wave current of vertical synchronizing frequency for use in correcting a pin-cushion distortion on the horizontal deflecting current.

Other circuit elements are formed similarly to those of the example shown in Figure 3.

Thus, during the A, B, C and D fields, the different read clock pulses $CL_A$, $CL_B$, $CL_C$ and $CLR_D$ are supplied respectively, and the periods of these A, B, C and D fields, or the respective vertical periods become equal to 10 m sec, so that the horizontal deflecting current waveform on which the parabolic wave current of the vertical synchronizing frequency for correcting the right and left pin-cushion distortion in each vertical period is superimposed becomes equal, thus removing jitter at the right and left ends of the picture screen. Accordingly, no special correcting circuit is necessary.

Since the periods of the A, B, C and D fields are become 10 m sec, the horizontal cycle of each field becomes different. This difference is, however, very small and can be neglected.

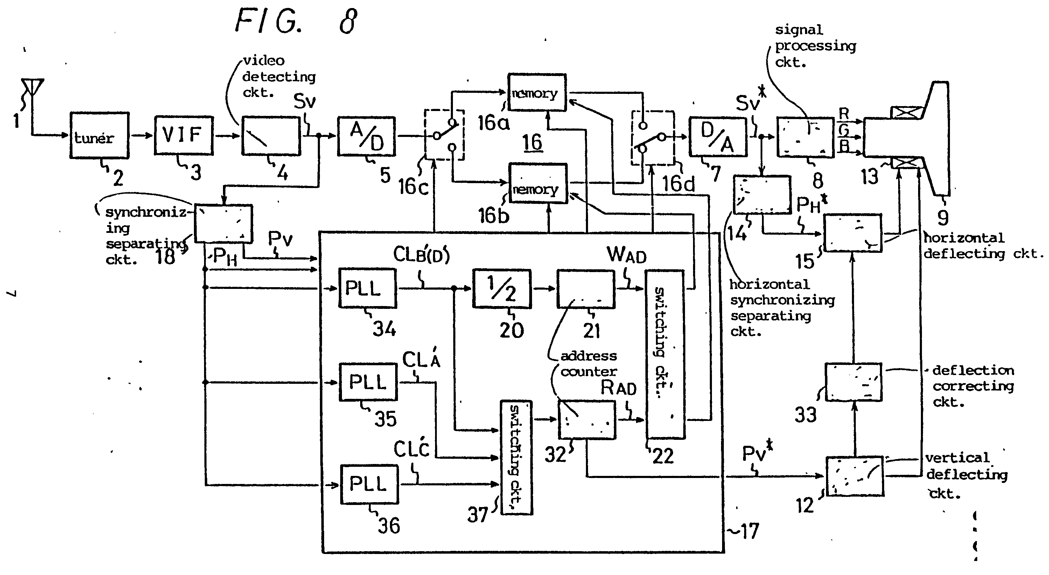

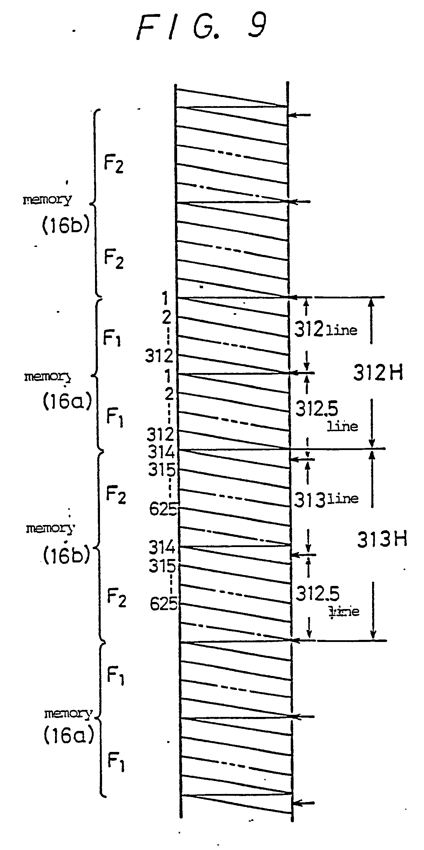

Figure 8 shows another embodiment in which the timing at which the vertical synchronizing signal Pv* is produced is selected as shown by arrows in Figure 9. That is, at the timing of the beginning of the first F1 field, at the timing with a delay of 312 lines after the preceding timing, at the timing with the delay of 312.5 llines after the preceding timing, at the timing with a delay of 313 lines after the preceding timing and at the timing with a delay of 312.5 lines after the preceding timing, or at the timing of the beginning of the first F1 field and at the similar timing, the vertical synchronizing signal Pv* is produced.

When the vertical synchronizing signal Pv* is produced at such timings, the scanning line of the F2 field is displaced upward by one scanning line as compared with the embodiment of Figure 6. This problem, however, can be solved by delaying the signal supplied to the picture receiving tube 9 by one line during the F2 field, or shifting the whole of the signal down by one line during the F2 field.

In the embodiment of Figure 8, the duration of the period of 312 lines (hereinafter referred to as A' field) from the beginning of the first F1 field, the duration of the period of 312.5 lines (hereinafter referred to as B' field) after the preceding period, the duration of 313 lines (hereinafter referred to as C' field) and the duration of the period of 312.5 lines (hereinafter referred to as D' field) after the preceding period, or the respective vertical cycles all become 1/100 sec = 10 m sec.

PLL circuits 34, 35 and 36 produce read clock pulses $CL'_{B(D)}$, $CL'_A$ and $CL'_D$ for the periods B'(D'), A' and C'. The PLL circuits 34 to 36 are supplied with the horizontal synchronizing signal $P_H$ from the synchronizing separating circuit 18.

In the embodiment of Figure 8, since the periods of A' to D' fields all become 10 m sec, if the frequencies of the clock pulses $CL'_{B(D)}$, $CL'_A$ and $CL'_C$ produced by the PLL circuits 34, 35 and 36 are respectively taken as $f'_{B(D)}$, $f'_A$ and $f'_C$, the following relation can be established:

$$f'_{B(D)} : f'_A : f'_C$$

$$= \frac{312.5 \text{ lines}}{10 \text{ m sec}} : \frac{312 \text{ lines}}{10 \text{ m sec}} : \frac{313 \text{ lines}}{10 \text{ m sec}}$$

$$= 625 : 624 : 626 \qquad (2)$$

Accordingly, the frequencies $f'_{B(D)}$, $f'_A$, $f'_C$ of the clock pulses $C'_{B(D)}$, $CL'_A$ and $CL'_C$ are respectively selected to be $1250 f_H$, $1248 f_H$ and $1252 f_H$.

The clock pulses $CL'_{B(D)}$, $CL'_A$ and $CL'_C$ from the PLL circuits 34, 35 and 36 are respectively supplied to a switching circuit 37 which supplies clock pulses $CL'_{B(D)}$, $CL'_A$ and $CL'_C$ during the field periods of B'(D'), A' and C'. The clock pulses derived from the switching circuit 37 are supplied to the read address counter 32.

In Figure 8, the clock pulse $CL'_{B(D)}$ derived from the PLL circuit 34 is supplied through the frequency divider 20 to the write address counter 21 as the write clock pulse therefor.

Other circuit elements are formed similarly to those of the embodiment of Figure 6.

During the respective B'(D'), A' and C' fields, the different read clock pulses $CL'_{B(D)}$, $CL'_A$ and $CL'_C$ are supplied respectively, so that periods of respective A', B', C' and D' fields, or the respective vertical periods all became 10 m sec. Therefore, the horizontal deflecting current waveforms in the respective vertical periods become equal, so that similar actions and effects to those of the embodiments of Figure 6 are achieved.

The frequencies of the write clock pulse and the read clock pulse are not limited to those of the above-described embodiments but may be, for example, twice the above frequencies. While, in the above embodiments, the interlaced scanning system of the video system of 625 lines/50 fields and 2:2 is explained, the invention is not limited to the above system but can be applied similarly to other interlaced scanning systems. Moreover, the field frequency can be changed to be three times, four times, ... the normal frequency.

## Claim

A television receiver comprising: scan converter means (16) including field-memory means (16a, 16b) supplied with an input video signal of an interlaced television system, memory control means (17) for supplying writing and reading signals to said field-memory means (16a, 16b) where the frequency of said reading signal is different from that of said writing signal, and an output terminal for deriving an output video signal; and a video display means (19) supplied with said output video signal; characterized by: means (19 to 36) provided in said memory control means (17) for changing the frequency of said reading signal at a vertical rate such that vertical intervals of odd fields of said output video signal are made of substantially identical duration to vertical intervals of even fields of said output video signal.

## Patentanspruch

Fernsehempfänger mit einem Abtastumsetzer (16), der Halbbildspeicher (16a, 16b) enthält, die mit einem Eingangsvideosignal eines Zeilensprung-Fernsehsystems versorgt werden, einer Speichersteuerung (17) zum Anlegen von Schreib- u. Lesesignalen an die Halbbildspeicher (16a, 16b), wobei die Frequenz des Lesesignals verschieden von derjenigen des Schreibsignals ist, und einem Ausgangsanschluß zum Gewinnen eines Ausgangsvideosignals, sowie mit einem Bildanzeigemittel (9), das mit dem Ausgangsvideosignal versorgt wird, gekennzeichnet durch in der Speichersteuerung (17) vorgesehene Mittel (19 bis 36) zum Ändern der Frequenz des Lesesignals bei einer Vertikalrate derart, daß die Vertikalintervalle von ungeradzahligen Halbbildern des Ausgangsvideosignals im wesentlichen zu solchen mit derselben Dauer wie derjenigen der Vertikalintervalle von geradzahligen Halbbildern des Ausgangsvideosignals gemacht werden.

## Revendication

Un récepteur de télévision comprenant: des moyens convertisseurs de balayage (16) comprenant des moyens de mémoire de trame (16a, 16b) qui reçoivent un signal vidéo d'entrée d'un système de télévision entrelacé, des moyens de commande de mémoire (17) pour appliquer des signaux d'écriture et de lecture aux moyens de mémoire de trame (16a, 16b), la fréquence du signal de lecture étant différente de celle du signal d'écriture, et une borne de sortie pour fournir un signal vidéo de sortie; et des moyens de visualisation vidéo (19) qui reçoivent le signal vidéo de sortie; caractérisé par: des moyens (19 à 36) qui sont incorporés dans les moyens de commande de mémoire (17) dans le but de changer la fréquence du signal de lecture à une cadence verticale, de façon que des intervalles verticaux de trames impaires du signal vidéo de sortie aient une durée pratiquement identique à celle d'intervalles verticaux de trames paires du signal vidéo de sortie.

FIG. 1

# FIG. 2A

# FIG. 2B

# FIG. 3

EP 0 160 706 B1

# F I G. 4A

# F I G. 4B

*FIG. 5A* (PV*) | 312 line | 311.5 line | 313 line | 313.5 line | 312 line |

*FIG. 5B*

*FIG. 5C*

FIG. 6

FIG. 7

FIG. 8

# F I G. 9